# EUROPEAN PATENT APPLICATION

(11) **EP 3 168 561 A1**
(43) Date of publication of application: **17.05.2017**
(21) Application number: 15194128.3
(22) Date of filing: 11.11.2015
(51) Int. Cl.: F28D 9/00

(54) **A DEVICE FOR EXCHANGE OF HEAT AND/OR MASS TRANSFER BETWEEN FLUID FLOWS**

(71) Applicant: Air To Air Sweden AB, 226 51 Lund (SE)
(72) Inventor: SIVERKLEV, Johan, SE-438 92 Härryda (SE)
(74) Representative: Kransell & Wennborg KB

(57) **Abstract**

The present disclosure relates to a device for exchange of heat and/or mass transfer between fluid flows, which device comprises a first fluid inlet (3a), a first fluid outlet (3c), a second fluid inlet (5a), a second fluid outlet (5c), a plurality of first channel layers (3) connecting the first fluid inlet (3a) with the first fluid outlet (3c), and a plurality of second channel layers (5) connecting the second fluid inlet (5a) with the second fluid outlet (5c), wherein the plurality of first channel layers (3) and the plurality of second channel layers (5) are arranged in a stacked manner forming stacked fluid channels (2), wherein at least some of the first channel layers (3) are in physical contact with a respective second channel layer (5) thereby forming channel pairs, wherein the channel pairs are spaced apart from each other, whereby cross-current channels (7) are formed therebetween, extending from one lateral side (9) of the stacked fluid channels (2) to the opposite lateral side (11) of the stacked fluid channels (2), thereby forming lateral fluid inlets (13) between lateral edges of first channel layers (3) and second channel layers (5) and lateral fluid outlets between opposite lateral edges of first channel layers (3) and second channel layers (5).

## Description

### TECHNICAL FIELD

The present disclosure generally relates to the exchange of heat or mass transfer between fluid flows.

### BACKGROUND

Conventional heat exchangers are always problematic to use in cold climate because the risk of freezing. This is because condensation water is accumulated inside the heat exchanger, which freezes when the temperature plummets below about -4 °C.

The more efficient a heat exchanger is the greater is the problem of freezing, especially for counterflow heat exchangers.

### SUMMARY

In view of the above, a general objective of the present disclosure is to provide a device for exchange of heat and/or mass transfer which at least mitigate the problems of the prior art.

There is hence provided a device for exchange of heat and/or mass transfer between fluid flows, which device comprises a first fluid inlet, a first fluid outlet, a second fluid inlet, a second fluid outlet, a plurality of first channel layers connecting the first fluid inlet with the first fluid outlet, and a plurality of second channel layers connecting the second fluid inlet with the second fluid outlet, wherein the plurality of first channel layers and the plurality of second channel layers are arranged in a stacked manner forming stacked fluid channels, wherein at least some of the first channel layers are in physical contact with a respective second channel layer thereby forming channel pairs, wherein the channel pairs are spaced apart from each other, whereby cross-current channels are formed therebetween, extending from one lateral side of the stacked fluid channels to the opposite lateral side of the stacked fluid channels, thereby forming lateral fluid inlets between lateral edges of first channel layers and second channel layers and lateral fluid outlets between opposite lateral edges of first channel layers and second channel layers.

This configuration enables a multitude of different uses of the device. The device may for example be used as a heat exchanger with counter-current flow in the first channel layers and the second channel layers, and a cross-current flow in the cross-current channels. This hybrid set-up provides a great plurality of different applications; it allows for example a three-fluid set-up or a dual fluid set-up where the counter-current flow is provided from the same fluid source as the cross current flow.

In this case, there will be a heat exchange and/or mass transfer between the counter- (or con-) current flows in the channel pair in addition to a "main" heat exchange and/or mass transfer between the cross-current flow and the counter-(or con-) current flows. In case both the first fluid inlet and the second fluid inlet are connected to the same fluid source there will be an automatic flow regulation in the channels of the first channel layers and second channel layers. For example, in freezing temperatures, in case one of the channels is in the process of freezing, the additional flow resistance created in this channel by ice formation will lead to a corresponding higher flow rate in the remaining channels. In this application this will result in a redistribution of fluid flow creating a higher flow of warm air e.g. exhaust air from a building through the remaining channels. This would in turn heat these channels to such an extent that the device could be used in lower temperatures than existing devices of this type, where the channels would freeze at a higher temperature than what can be obtained by the device of the present disclosure. In particular, this would allow a serial procedure of channels freezing, compared to existing solutions where all channels freeze essentially simultaneously.

According to one embodiment a cross-current channel is arranged between each channel pair.

According to one embodiment the cross-sectional area of any channel of the first channel layers is greater than a cross-sectional area of any channel of the second channel layers. The cross-sectional dimension of the channels may hence be designed such that the fluid flows can be differentiated. The order in which the channels of the first channel layers and the second channel layers freeze may thereby be determined. The different cross-sectional dimensions may also be a design-parameter when determining the types of fluid that are to flow through the first channel layers and the second channel layers, respectively. A liquid fluid may for example store much more energy than a gas. The fluid which is able to store the most energy may thus for example be routed to flow through the channels with a smaller cross-sectional area.

According to one embodiment the first fluid inlet and the second fluid outlet form a first fluid interface arranged at a first end of the first channel layers and second channel layers.

According to one embodiment the first fluid interface is triangular-shaped in a plane parallel with a first channel layer.

According to one embodiment the first fluid outlet and the second fluid inlet form a second fluid interface arranged at a second end of the first channel layers and second channel layers, opposite to the first end.

According to one embodiment each first channel layer comprises a plurality of parallel channels and each second channel layer comprises a plurality of parallel channels.

According to one embodiment the parallel channels of the first channel layers are arranged in parallel with the parallel channels of the second channel layers.

According to one embodiment the first fluid inlet and the second fluid inlet are arranged at a first end and a second end, respectively, of the stacked fluid channels, the first end and the second end being opposite ends of the stacked fluid channels, and wherein the first fluid outlet is arranged at the second end and the second fluid outlet is arranged at the first end.

One embodiment comprises a fluid conduit extending through each of the plurality of first channel layers and each of the plurality of second channel layers.

According to one embodiment the fluid conduit extends a plurality of times through each of the plurality of first channel layers and each of the plurality of second channel layers.

According to one embodiment each first channel layer is made of two sheets and each second channel layer is made of two sheets, wherein each second channel layer shares a sheet with a second channel layer thereby forming the channel pair.

According to a second aspect of the present disclosure there is provided a device for exchange of heat and/or mass transfer between fluid flows, which device comprises: a first fluid inlet, a first fluid outlet, a plurality of first channel layers connecting the first fluid inlet with the first fluid outlet, the plurality of first channel layers being arranged in a stacked manner forming stacked fluid channels, and a fluid conduit extending through each of the plurality of first channel layers, wherein at least some first channel layers are spaced apart from each other, whereby cross-current channels are formed therebetween, extending from one lateral side of the stacked fluid channels to the opposite lateral side of the fluid channels, thereby forming lateral fluid inlets between lateral edges of first channel layers and lateral fluid outlets between opposite lateral edges of first channel layers, and wherein the fluid conduit extends through each cross-current channel.

The device could hence be described as a type of tube and fin heat exchanger, however with multiple flow paths arranged to provide differentiated heat exchange with the fluid conduit. This reduces the risk of simultaneous frost formation in first channel layers and the cross-current channels.

According to one embodiment the fluid conduit extends a plurality of times through each of the plurality of first channel layers and each of the plurality of cross-current channels. The fluid conduit thus intersects each first channel layer a plurality of times, and each cross-current channel a plurality of times.

The fluid conduit hence intersects each first channel layer and cross-current channel, wherein when having exited the stacked fluid channels the fluid conduit is bent back and led through the stacked fluid channels again. This is repeated a plurality of times.

The fluid conduit hence forms a cooling coil or a heating coil. The fluid conduit is typically a tube.

The fluid conduit should be manufactured by a material with good heat conducting characteristics, for example a metal, e.g. copper, or a heat-conducting plastic material, e.g. plastic mixed with a metal powder.

In a typical embodiment a liquid is arranged to flow through the fluid conduit, for example a refrigerant.

The device could also, according to some embodiments, comprise more than one fluid conduits of the type described above.

One embodiment comprises a second fluid inlet, a second fluid outlet, a plurality of second channel layers connecting the second fluid inlet with the second fluid outlet, wherein the plurality of first channel layers and the plurality of second channel layers are arranged in a stacked manner forming the stacked fluid channels, and a fluid conduit extending through each of the plurality of first channel layers and each of the plurality of second channel layers,, wherein at least some first channel layers are spaced apart from second channel layers, whereby cross-current channels are formed therebetween, extending from one lateral side of the stacked fluid channels to the opposite lateral side of the fluid channels, thereby forming lateral fluid inlets between lateral edges of first channel layers and second channel layers and lateral fluid outlets between opposite lateral edges of first channel layers and second channel layers.

According to one embodiment the fluid conduit extends a plurality of times through each of the plurality of first channel layers and each of the plurality of second channel layers.

According to one embodiment the first fluid inlet and the second fluid outlet form a first fluid interface arranged at a first end of the first channel layers and second channel layers.

According to one embodiment the first fluid interface is triangular-shaped in a plane parallel with a first channel layer.

According to one embodiment the first fluid interface forms an isosceles triangle.

According to one embodiment the first fluid outlet and the second fluid inlet form a second fluid interface arranged at a second end of the first channel layers and second channel layers, opposite to the first end.

According to one embodiment the second fluid inlet and the second fluid outlet form a first fluid interface arranged at a first end of the first channel layers and second channel layers.

According to one embodiment the second fluid interface forms an isosceles triangle.

According to one embodiment each first channel layer comprises a plurality of parallel channels and each second channel layer comprises a plurality of parallel channels.

According to one embodiment the parallel channels of the first channel layers are arranged in parallel with the parallel channels of the second channel layers.

According to one embodiment the first fluid inlet and the second fluid inlet are arranged at a first end and a second end, respectively, of the stacked fluid channels, the first end and the second end being opposite ends of the stacked fluid channels, and wherein the first fluid outlet is arranged at the second end and the second fluid outlet is arranged at the first end. Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 depicts a perspective view of an example of a device for exchange of heat and/or mass transfer;
Fig. 2a shows a top view of the device in Fig. 1 in a first mode of operation;
Fig. 2b shows a top view of the device in Fig. 1 in a second mode of operation;
Fig. 3 is cross-sectional view of some of the first channel layers and second channel layers of the device in Fig. 1;
Figs 4a-4d show cross-sectional views of some first channel layers and second channel layers of different variations of the device in Fig. 1;
Figs 5a-b shows another example of a device for exchange of heat and/or mass transfer; and
Figs 6a-b show another aspect of a device for exchange of heat and/or mass transfer.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

This disclosure relates to a device for exchange of heat and/or mass transfer between fluids. The device is in particular a hybrid device in that it allows for example counterflow or concurrent flow together with a cross-current flow; it is a multiple-path heat and/or mass exchange unit. The device is hence able to provide heat and/or mass transfer between at least three simultaneous fluid flows.

According to a first aspect, the device comprises a first fluid inlet, a first fluid outlet, a second fluid inlet and a second fluid outlet. Moreover, the device has a plurality of first channel layers connecting the first fluid inlet with the first fluid outlet, and a plurality of second channel layers connecting the second fluid inlet with the second fluid outlet.

Each first channel layer may for example be made of two corrugated sheets joined together. Each such first channel layer may comprise a plurality of parallel channels. Alternatively, each first channel layer may be formed of two plates whereby the device forms a plate heat exchanger, e.g. a gasket plate heat exchanger.

Each second channel layer may for example be made of two corrugated sheets joined together. Each such second channel layer may comprise a plurality of parallel channels. Alternatively, each second channel layer may be formed of two plates whereby the device forms a plate heat exchanger e.g. a gasket plate heat exchanger.

The plurality of first channel layers and the plurality of second channel layers are arranged in a stacked manner forming stacked fluid channels.

At least some, and preferably all, of the first channel layers and second channel layers are arranged in pairs, in physical contact with each other thus forming channel pairs. The channel pairs are spaced apart from each other, whereby cross-current channels are formed therebetween, extending from one lateral side of the stacked fluid channels to the opposite lateral side of the fluid channels. By lateral side is here meant those sides that are parallel with the general fluid flow direction in the channel layers, i.e. fluid inlet to fluid outlet direction. Lateral fluid inlets are thereby formed between lateral edges of first channel layers and second channel layers and lateral fluid outlets between opposite lateral edges of first channel layers and second channel layers.

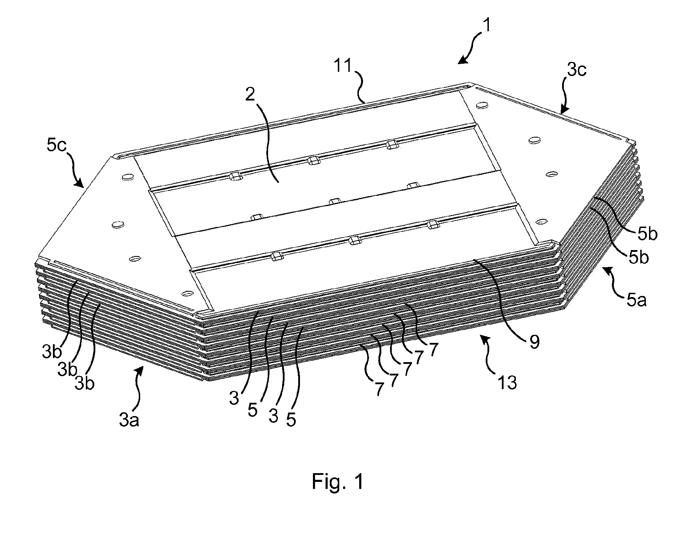

Fig. 1 shows an example of a device 1 for heat exchange and/or mass transfer between fluid flows. The exemplified device 1 comprises a plurality of first channel layers 3 and a plurality of second channel layers 5 stacked on top of each other forming a plurality of stacked fluid channels 2.

The device 1 furthermore comprises a first fluid inlet 3a and a first fluid outlet 3c. According to the example, the first fluid inlet 3a comprises a plurality of inlet openings 3b, each being connected to a respective first channel layer 3. The first fluid outlet 3c may also comprise a plurality of outlet openings, each being connected to a respective first channel layer 3. The first channel layers 3 hence connect the first fluid inlet 3a with the first fluid outlet 3c.

The device 1 comprises a second fluid inlet 5a and a second fluid outlet 5c. According to the example, the second fluid inlet 5a comprises a plurality of inlet openings 5b, each being connected to a respective second channel layer 5. The second fluid outlet 5c may also comprise a plurality of outlet openings, each being connected to a respective second channel layer 5. The second channel layers 5 hence connect the second fluid inlet 5a with the second fluid outlet 5c.

According to the example shown in Fig. 1, the first channel layers 3 and the second channel layers 5 are arranged alternatingly in a stacked manner. The first channel layers 3 and the second channel layers 5 are arranged in pairs, forming channel pairs. Each first channel layer 3 and second channel layer 5 that form a channel pair are in physical contact with each other. This means that there will be a heat and/or mass transfer between the channel layers forming each channel pair. Moreover, there is also a heat and/or mass transfer between channel pairs and cross-current channels.

The channel pairs are spaced apart from each other in this stack. There is hence a distance between some first channel layers 3 and second channel layers 5, whereby cross-current channels 7 are formed therebetween. The cross-current channels 7 extend from one lateral side 9 of the stacked fluid channels to the opposite lateral side 11 of the stacked fluid channels. Lateral fluid inlets 13 are thereby formed between lateral edges of first channel layers 3 and second channel layers 5 and lateral fluid outlets are formed between opposite lateral edges of first channel layers 3 and second channel layers 5. It should be noted that the lateral fluid inlets 13 may also function as lateral fluid outlets and the lateral fluid outlets may also function as lateral fluid inlets; it merely depends on from which of two directions fluid flow is taken into the cross-current channels 7.

The flow direction provided by the cross-current channels 7 are at right angle with the general flow direction in the channel or channels of the first channel layer 3 and the second channel layer 5. They hence provide a cross-current fluid flow direction relative to the flow directions provided by the first channel layers 3 and the second channel layers 5.

According to the example in Fig. 1 each first channel layer 3 comprises a plurality of parallel channels and each second channel layer 5 comprises a plurality of parallel channels. The parallel channels of the first channel layers 3 are arranged in parallel with the parallel channels of the second channel layers 5. Moreover, according to this example, the first fluid inlet 3a and the second fluid inlet 5a are arranged at a first end and a second end, respectively, of the stacked fluid channels 2. The first end and the second end are opposite ends of the stacked fluid channels 2. The first fluid outlet 3c is arranged at the second end and the second fluid outlet 5c is arranged at the first end.

Moreover, according to the example in Fig. 1 the first fluid inlet 3a and the second fluid outlet 5c form a first fluid interface arranged at a first end of the first channel layers 3 and second channel layers 5, i.e. at the first end of the stacked fluid channels 2. The first fluid interface can for example be triangular-shaped in a plane parallel with a first channel layer 3. The first fluid interface may for example form an isosceles triangle in this plane.

The first fluid outlet 3c and the second fluid inlet 5a form a second fluid interface arranged at a second end of the first channel layers and second channel layers, opposite to the first end, i.e. at the second end of the stacked fluid channels 2. The second fluid interface can for example be triangular-shaped in a plane parallel with a first channel layer 3. The second fluid interface may for example form an isosceles triangle in this plane.

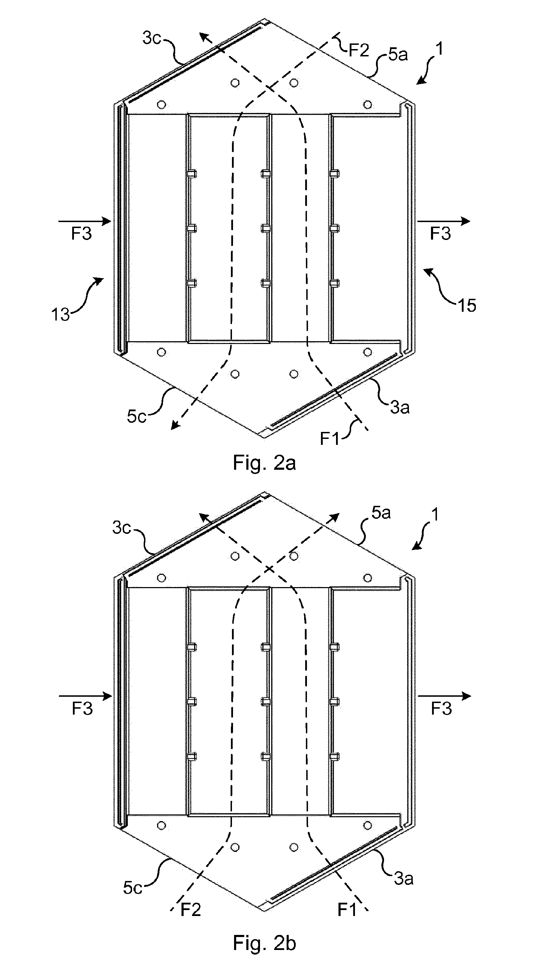

Fig. 2a shows a top view of the device 1. Three different fluid flows F1, F2 and F3 are also illustrated. According to the mode of use shown in Fig. 2a the device 1 is used as a counterflow and cross-current flow device. A first fluid flow F1 enters through the first fluid inlet 3a, flows through the channels of the first channel layers 3 and exits through the first fluid outlet 3c. A second fluid flow F2 enters through the second fluid inlet 5a, flows through the channels of the second channel layers 5 and exits through the second fluid outlet 5c. Moreover, a third fluid flow F3 is provided as a cross-current flow relative to the first fluid flow F1 and the second fluid flow F2. The third fluid flow F3 enters the stacked fluid channels 2 through the lateral fluid inlets 13 and exits on the opposite side, through the lateral fluid outlets 15.

This operation of the device 1 is especially advantageous in cold weather when there is a risk of freezing in the device 1. The design of the device 1 has been shown to be able to operate at in temperatures significantly below conventional heat exchangers, where freezing occurs at approximately -4 °C. This eliminates the need of auxiliary heaters until much lower temperatures. The effect can be obtained for example by letting all three fluid flows F1-F3 be air, with the first fluid flow F1 and the second fluid flow F2 being exhaust air. Because of the internal heat exchange between first channel layers 3 and second channel layers 5 in physical contact with each other and forming channel pairs, freezing inside the channels may be prevented until much lower temperatures than would be possible today, without utilising auxiliary heaters. Such operation is especially advantageous in cold climate, but a trade-off is that heat exchange, i.e. heat exchange with the third fluid flow F3, becomes less efficient than in conventional heat exchangers. This can however be solved by operating the device 1 differently in warmer climate, as shown in Fig. 2b, where the first channel layers 3 and second channel layers 5 are operated in concurrent fluid flow mode. Here, the second fluid inlet 5a and second fluid outlet 5c have changed function; the second fluid outlet 5c is in this case used for fluid intake of the second fluid flow F2. This operation can for example be ensured by an aggregate connected to the device 1, which aggregate comprises draught valves arranged to direct the fluid flow direction. The device 1 may hence be operated in different modes depending on the season.

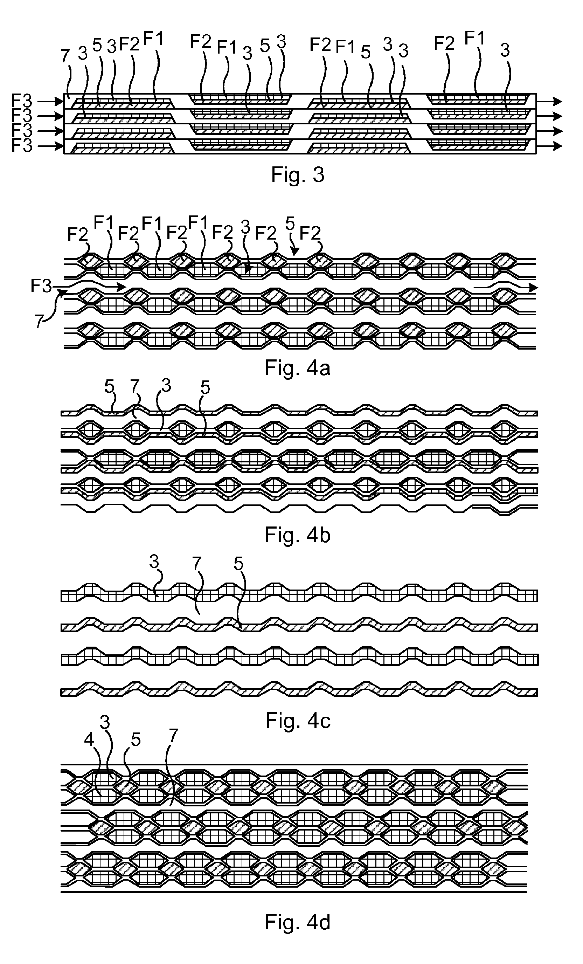

Fig. 3 shows a cross-section of the stacked fluid channels 2 in the direction of the channels i.e. along the first fluid flow F1 and second fluid flow F2 shown in Fig. 2a for example. The first fluid flow F1 and the second fluid flow F2 is in this figure in a respective direction into and out from the illustration. The first channel layers 3 are marked with a chequered pattern and the second channel layers 5 are marked with a dashed slanting pattern. The cross-current channels 7 are left white. The third fluid flow F3 is shown flowing from left to right, inside a respective cross-current channel 7, and perpendicular to the first fluid flow F1 and the second fluid flow F2.

Figs 4a to 4c show other examples of how first channel layers 3, the second channel layers 5 and cross-current channels 7 may be arranged. The first channel layers and second channel layers are also here marked with chequered pattern and dashed pattern, respectively.

As can be seen, according to these variations, the cross-sectional area of any channel of the first channel layers 3 is greater than a cross-sectional area of any channel of the second channel layers 5. Variations in which all channels have the same cross-section are however also envisaged.

Fig. 4d shows another variation, in which there are first channel layers 3, second channel layers 5 and first channel layers 3 formed in triplets in physical contact with each other, and distanced from another such triplet by a cross-current channel 7.

In general, it may be noted that there may be more than three fluid flows provided in a device according to the present disclosure. This is dependent of the number of channel layers and corresponding fluid inlets and outlets provided.

As an example, in fig 4d, first channel layers 3, may be provided with a flow of water at 4 °C, second channel layers, 5, may be provided with a flow of hot water from district heating at e.g. 120 °C, third layers e.g. the cross-current channels may be provided with supply air, and fourth channel layers 4, may be provided with hot water supply from a building's heating recirculation system. The district heating water heats the water in the first channel layers and the fourth channel layers to about 60 °C and 80 °C respectively, which can then be transported to a hot water system and a heating system (separate flows). The hot water and district heating water in turn heat the supply air to 25 °C. In industrial applications, this type of configuration could lead to control of several processes just by varying flows according to suitable algorithms.

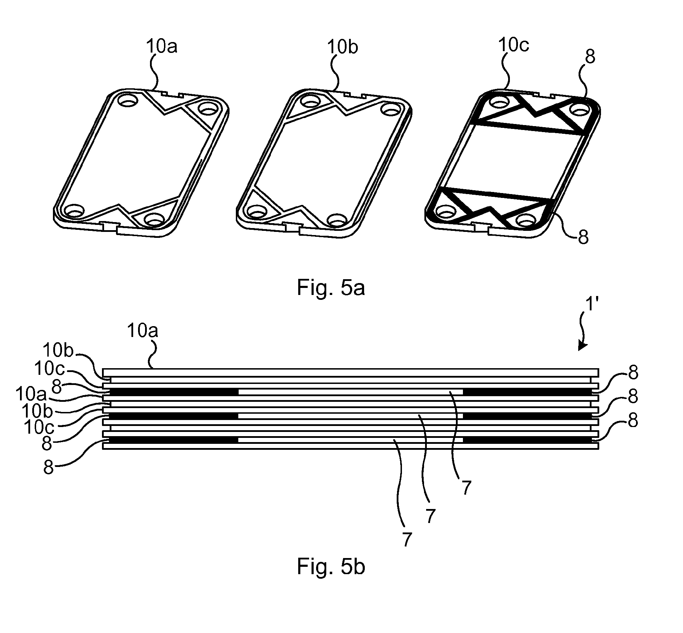

Fig. 5a and 5b show another example of a device for exchange of heat and/or mass transfer of fluids. This device 1' differs from the device 1 in that it is a plate heat exchanger. The first channel layers and second channel layers are arranged in channel pairs also in this example. In Fig. 5a, three plates 10a-10c are shown forming a channel pair. These three plates are stacked such that between the two plates 10a and 10b to the left a first fluid flow can be provided and between the two plates 10b and 10c to the right a second fluid flow can be provided. The corner openings form part of fluid inlets and fluid outlets. The function of the device 1' is the same as for the device 1, i.e. it enables counter-current or concurrent flows, one flow in the first channel layers and one in the second channel layers. The channel pairs are spaced apart from each other, for example by means of spacers 8, whereby the cross-current channels 7 are formed therebetween as shown in Fig. 5b where three stacked channel pairs 10a-c are shown with a cross-current channel 7 between each channel pair. The spacers 8 may for example be gaskets.

The channel pairs may share a common plate, so that each channel pair is made of three plates. Alternatively, the channel pairs may be made of four plates, two forming a first channel layer and two forming a second channel layer.

The plates could for example be planar or they could have a turbulence-inducing structure, e.g. a herringbone structure.

The device 1' could be submersible or immersed in a liquid, in which case for example the third flow, through the cross-current channels, could be a convective flow instead of a mechanical flow. Of course, the device 1' does not have to be of the submersible type; all flows could of course also be mechanical fluid flows.

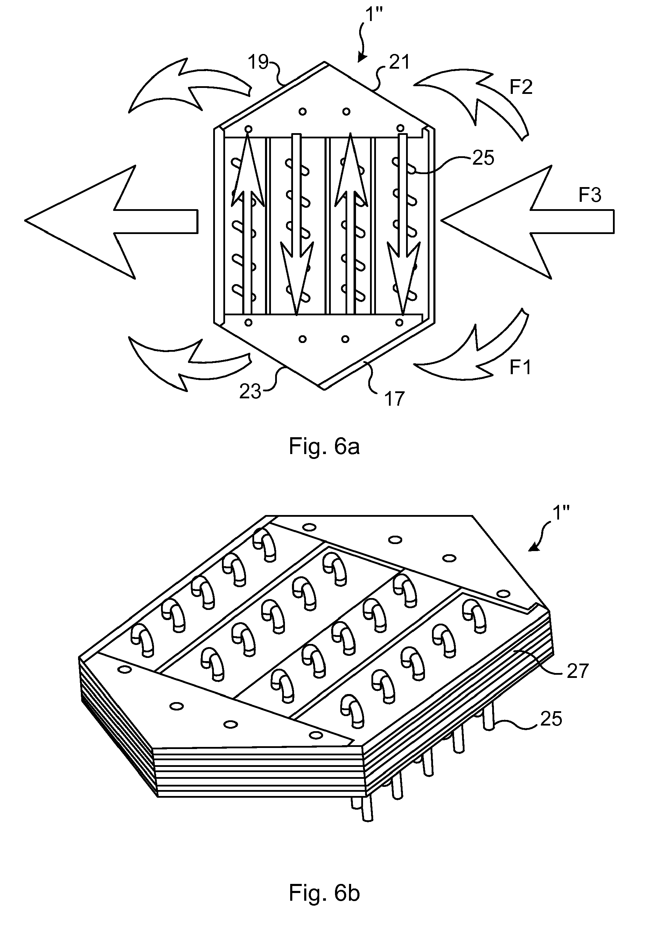

Fig. 6a shows another aspect of a device for exchange of heat and/or mass transfer. According to this aspect, the device 1" comprises a first fluid inlet 17, and a first fluid outlet 19. The device 1" furthermore includes a second fluid inlet 21, and a second fluid outlet 23.

The device 1" has a plurality of first channel layers connecting the first fluid inlet with the first fluid outlet, a plurality of second channel layers connecting the second fluid inlet with the second fluid outlet, and a fluid conduit 25 extending through each of the plurality of first channel layers and each of the plurality of second channel layers.

The plurality of first channel layers and the plurality of second channel layers are arranged in a stacked manner forming stacked fluid channels. At least some first channel layers are spaced apart from second channel layers, whereby cross-current channels 27 are formed therebetween, extending from one lateral side of the stacked fluid channels to the opposite lateral side of the fluid channels, thereby forming lateral fluid inlets between lateral edges of first channel layers and second channel layers and lateral fluid outlets between opposite lateral edges of first channel layers and second channel layers. The fluid conduit 25 hence also extends through the cross-current channels 27. This means that the fluid conduit, and thus any fluid flowing therein, will be subjected to also a cross-current fluid flow in operation.

A cooling fluid or a heating fluid may flow inside the fluid conduit 25, which is thereby heated or cooled by all three fluid flows, flowing through the first channel layers, the second channel layers and through the cross-current channels 27.

To maximise efficiency, according to one variation each first channel layer is spaced apart from each second channel layer, i.e. there is a cross-current channel 27 between any first channel layer and second channel layer.

Fluid flow into the first channel layers, second channel layers and the cross-current channels 27 may be taken from the same source. To this end, all fluid flows, except the fluid flow in the fluid conduit 25, may be taken from one fluid environment, for example from inside a building in which the device 1" is installed or from outside the building.

The device 1" may be made of a number of stacked sheets as shown in Fig. 6b, or it may alternatively be made of a number of stacked plates, thereby forming a plate heat exchanger.

According to one variation a conduit like fluid conduit 25 may also be provided through the first channel layers, the second channel layers and the cross-current channels in the examples shown in Fig. 1 and Fig. 5.

According to one variation the device 1" only comprises first channel layers, and the first fluid inlet 17, the first fluid outlet 19, wherein the first channel layers are spaced apart from each other forming the cross-current channels therebetween. The device 1" would according to this variation also comprise the fluid conduit 25 extending a plurality of times through the first channel layers, forming a coil. In this case, there would only be two fluid flows, in addition to the fluid flow in the fluid conduit 25 in the device 1", namely the first fluid flow F3 and the third fluid flow F1. In this case, the first fluid flow F1 and the third fluid flow F3 could be flowing simultaneously in the device 1", or they could flow alternatingly; the first fluid flow F1 could for example first be set to flow through the device 1" first and in case the first channel layers start to freeze, the third fluid flow F3 could be provided through the device 1" while the first fluid flow F1 would mechanically be set to be stopped. While the third fluid flow F3 is flowing, thus exchanging heat with the fluid conduit 25, the ice in the first channel layers would start melting. This operation could be repeated with the first channel layers taking over the heat exchange procedure with the fluid conduit 25 if the cross-current channels would start to freeze.

In case of sheets or plates forming the first channel layers and the second channel layers. these may be made of impermeable, permeable, or semi-permeable material. The device may be formed of sheets or plates all having the same properties. All sheets or plates may thus be impermeable, permeable or semipermeable. Alternatively, the device may comprise a combination of sheets or plates with different permeability properties. For example a subset of sheets or plates may be permeable and another subset of sheets or plates may be impermeable. Every other sheet or plate may for example be permeable and the remaining sheets may be impermeable.

The sheets or plates may for example be made of metal, for example stainless steel, aluminium, copper or any other metal suitable for heat transfer, plastic such as PE, PP, PET, PS, PPS, Polycarbonate, nylon, semi-permeable membranes, for example PEMs like Nafion, or any other suitable material for heat exchange or mass transfer applications, for example carbon foam and porous sheets. It is also envisaged that the sheets or plates may comprise a mixture of different materials.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A device (1; 1') for exchange of heat and/or mass transfer between fluid flows, which device (1; 1') comprises:
a first fluid inlet (3a),
a first fluid outlet (3c),
a second fluid inlet (5a),
a second fluid outlet (5c),
a plurality of first channel layers (3) connecting the first fluid inlet (3a) with the first fluid outlet (3c), and
a plurality of second channel layers (5) connecting the second fluid inlet (5a) with the second fluid outlet (5c),
wherein the plurality of first channel layers (3) and the plurality of second channel layers (5) are arranged in a stacked manner forming stacked fluid channels (2),
wherein at least some of the first channel layers (3) are in physical contact with a respective second channel layer (5) thereby forming channel pairs,
wherein the channel pairs are spaced apart from each other, whereby cross-current channels (7) are formed therebetween, extending from one lateral side (9) of the stacked fluid channels (2) to the opposite lateral side (11) of the stacked fluid channels (2), thereby forming lateral fluid inlets (13) between lateral edges of first channel layers (3) and second channel layers (5) and lateral fluid outlets (15) between opposite lateral edges of first channel layers (3) and second channel layers (5).

2. The device (1; 1') as claimed in any of the preceding claims, wherein a cross-current channel (7) is arranged between each channel pair.

3. The device (1) as claimed in any of the preceding claims, wherein the cross-sectional area of any channel of the first channel layers (3) is greater than a cross-sectional area of any channel of the second channel layers (5).

4. The device (1) as claimed in any of the preceding claims, wherein the first fluid inlet (3a) and the second fluid outlet (5c) form a first fluid interface arranged at a first end of the first channel layers (3) and second channel layers (5).

5. The device (1) as claimed in claim 4, wherein the first fluid interface is triangular-shaped in a plane parallel with a first channel layer (3).

6. The device (1) as claimed in any of the preceding claims, wherein the first fluid outlet (3c) and the second fluid inlet (5a) form a second fluid interface arranged at a second end of the first channel layers (3) and second channel layers (5), opposite to the first end.

7. The device (1) as claimed in any of the preceding claims, wherein each first channel layer (3) comprises a plurality of parallel channels and each second channel layer (5) comprises a plurality of parallel channels.

8. The device as claimed in claim 9, wherein the parallel channels of the first channel layers (3) are arranged in parallel with the parallel channels of the second channel layers (5).

9. The device (1) as claimed in any of the preceding claims, wherein the first fluid inlet (3a) and the second fluid inlet (5a) are arranged at a first end and a second end, respectively, of the stacked fluid channels (2), the first end and the second end being opposite ends of the stacked fluid channels (2), and wherein the first fluid outlet (3c) is arranged at the second end and the second fluid outlet (5c) is arranged at the first end.

10. The device as claimed in any of the preceding claims, comprising a fluid conduit extending through each of the plurality of first channel layers and each of the plurality of second channel layers.

11. The device as claimed in claim 10, wherein the fluid conduit extends a plurality of times through each of the plurality of first channel layers and each of the plurality of second channel layers.

12. The device (1) as claimed in any of the preceding claims, wherein each first channel layer (3) is made of two sheets and each second channel layer (5) is made of two sheets, wherein each second channel layer (3) shares a sheet with a second channel layer (5) thereby forming the channel pair.

13. A device for exchange of heat and/or mass transfer between fluid flows, which device comprises:
a first fluid inlet,
a first fluid outlet,
a plurality of first channel layers connecting the first fluid inlet with the first fluid outlet, the plurality of first channel layers being arranged in a stacked manner forming stacked fluid channels, and
a fluid conduit extending through each of the plurality of first channel layers,
wherein at least some first channel layers are spaced apart from each other, whereby cross-current channels are formed therebetween, extending from one lateral side of the stacked fluid channels to the opposite lateral side of the fluid channels, thereby forming lateral fluid inlets between lateral edges of first channel layers and lateral fluid outlets between opposite lateral edges of first channel layers, and wherein the fluid conduit extends through each cross-current channel.
